## Europäisches Patentamt

## European Patent Office

## Office européen des brevets

(19)

(11) Publication number: **0 109 782**
**A2**

(12)

# EUROPEAN PATENT APPLICATION

(21) Application number: **83306558.4**

(22) Date of filing: **27.10.83**

(51) Int. Cl.³: **D 21 H 5/00**
**C 04 B 43/00**

(30) Priority: **18.11.82 GB 8232920**

(43) Date of publication of application:
**30.05.84 Bulletin 84/22**

(84) Designated Contracting States:
**AT BE CH DE FR GB IT LI LU NL SE**

(71) Applicant: **T&N Materials Research Limited**
**20 St. Mary's Parsonage**
**Manchester M3 2NL(GB)**

(72) Inventor: **Hargreaves, Brian**
**19 Aldermere Crescent Flixton, Urmston**
**Manchester, M31 2UE(GB)**

(72) Inventor: **McKenzie, Noel Christopher**
**5 Bernard Street**
**Rochdale, Lancs(GB)**

(74) Representative: **Newman, Dennis Daniel Ernest et al,**
**Trafford Park P.O. Box 20 Ashburton Road West**
**Manchester, M17 1RA(GB)**

(54) **Starch bound non-asbestos paper.**

(57) Non-asbestos flexible sheet material suitable for use as thermal insulation in domestic gas-fired boilers is made by dewatering on a water-permeable conveyor a layer of aqueous slurry and compressing and drying the dewatered layer, the aqueous slurry employed being one that contains the followng ingredients in the following proportions by dry weight:

| | |
|---|---|
| ball clay | 35-50% |
| layer silicate mineral having plate-like particles | 20-40% |
| cellulose fibres | at least 2% |
| starch | at least 2% |
| chopped glass fibre | 5-12% |
| vitreous fibre in wool form | 5-15% |
| bentonite | 2-10% |

the maximun content of combustible ingredients (including cellulose fibres and starch) in said slurry being 10% by dry weight.

EP 0 109 782 A2

Croydon Printing Company Ltd.

- 1 -

## Starch-Bound Non-Asbestos Paper

This invention relates to starch-bound non-asbestos paper.

In the specification of our UK Patent Application 2 088 917A published June 1982 there are described certain starch-bound non-asbestos papers particularly useful as flexible insulation in electrical equipment and made by conventional paper-making procedures from an aqueous paper-making slurry containing particular ingredients in particular proportions by dry weight, namely ball clay to form a flexible cohesive matrix, 30-60%; layer silicate mineral such as mica or chlorite, 25-55%; cellulose web-forming fibres, 3-15%; and starch as binder, 2-6%. The slurry preferably includes 1-10% by weight of rayon fibres as reinforcement additional to that provided by the silicate mineral and the cellulose fibres.

The present invention provides starch-bound non-asbestos papers combining the strength and flexibility that are necessary for conversion of the paper to corrugated form, with a content of combustible ingredients which is below that of the preferred products of our earlier UK Patent Application. Papers according to the invention when made in corrugated form are particularly suitable for use as thermal insulation in gas-fired boilers for domestic central heating installations.

The non-asbestos starch-bound flexible sheet material of the invention is made by a conventional paper-making process, but with the employment of an aqueous paper-making slurry of composition as set out below. The conventional process can be summarised as one in which an aqueous slurry of the various ingredients of the paper is progressively dewatered as a layer on a water-permeable conveyor, and the dewatered layer is subsequently compressed and dried. The new aqueous paper-making slurry employed in the process of the invention contains the following ingredients in the following proportions by dry weight:

| ball clay | 35-50% |
| layer silicate mineral having plate-like particles | 20-40% |
| cellulose fibres | at least 2% |
| starch | at least 2% |
| chopped glass fibre | 5-12% |
| vitreous fibre in wool form | 5-15% |
| bentonite | 2-10% |

the maximum content of combustible ingredients (including cellulose fibres and starch) in said slurry being 10% by dry weight.

The functions of the ball clay, layer silicate mineral, cellulose fibres and starch are as already indicated in the acknowledgement of the disclosure of our earlier UK Patent Application 2 088 917A. As to the rest, the chopped glass fibre (fibre chopped from continuous glass filament, usually in the form of strand) imparts tensile and tear strength to the finished paper; the vitreous fibre in wool form, for example mineral wool or glass

BAD ORIGINAL

wool, is a non-combustible processing aid to prevent clumping of the chopped glass fibres during processing and thus to assist formation of a uniform layer on the water-permeable conveyor; and the bentonite slows down dewatering of the layer so that losses of the fine particulate materials such as ball clay are kept to a minimum. Of the content of chopped glass fibre in the slurry, at least part is desirably formed by fibre of length in the range 5-7mm, for such fibres are the most effective improvers of tear strength and tensile strength. However, too high a content of such fibres may lead to the formation of 'strings' of fibres in the slurry during and immediately before the formation of the paper web. To avoid this, a content of shorter glass fibres (below 4mm length) is preferably included, to bring the tensile and tear strength of the product to the desired value.

The density of the paper produced will ordinarily be in the range 650-1,000kg/m$^3$.

The invention is further illustrated by the following Example.

## Example

This Example illustrates the preparation of a non-asbestos paper from an aqueous slurry of the following composition by dry weight:

|  | % by weight |
|---|---|
| cellulose fibres | 3 |
| glass fibres, 3mm length | 7 |
| glass fibres, 6mm length | 1 |
| mineral wool | 10 |
| ball clay | 45 |
| chlorite | 26 |
| bentonite | 5 |
| starch | 3 |
|  | 100 |

BAD ORIGINAL

A. Preparation of Slurry

i    Lapponia pulp (bleached softwood sulphate pulp) in sheet form was made into an aqueous slurry of solids content about 3% by weight and treated in a disc refiner until its freeness was 90° Schopper Riegler.

ii   The glass fibres (diameter, 9μm; 525g of length 3mm; 75g of 6mm length) were dispersed in 91 litres of water at 60°C by means of a conventional dispersing agent.

iii  The pulp of i (7.5kg wet weight) was added with vigorous agitation to the glass fibre dispersion, followed by 750g (dry weight) of mineral wool.  The mixture was then diluted with 91 litres of water at 60°C.  There were then successively added with vigorous stirring:

ball clay (3.4kg; particle size such that at least 90% passed a sieve of aperture 5μm diameter).

chlorite  (1.95kg; nominally 98% passing a sieve of aperture 250μm diameter.

bentonite (0.375kg; Wyoming type)

There was then added farina starch (225g dry weight, as 5% aqueous solution, prepared by heating at 95°C for 5-10 minutes), followed by water to reduce the solids content to about 1.5% by weight.

BAD ORIGINAL

## B. Preparation of Paper

The slurry of A above was made into flexible sheet material in an entirely conventional way, using conventional anionic polyacrylamide flocculating agent on a Fourdrinier flat wire paper machine, such as is described in chapters 10 and 11 of "Paper and Board Manufacture" by Julius Grant, James H. Young and Barry G. Watson (Publishers; Technical Division, The British Paper and Board Industry Federation, London 1978). The slurry is progressively dewatered as it travels on the water-permeable conveyor of the machine, and the dewatered material is consolidated by pressing between rollers. The sheet material thus formed is dried on heated cylinders and wound into reels.

The properties of flexible sheet material obtained from the slurry of A were:

| | | |
|---|---|---|
| Thickness | mm | 0.247 |
| Mass/unit area | $g/m^2$ | 200 |
| Density | $kg/m^3$ | 810 |
| Tensile strength | | |
|     Machine direction | MPa | 6.1 |
|     Cross direction | MPa | 4.6 |
| Tear strenght | | |
|     Machine direction | g/mm | 100 |
|     Cross direction | g/mm | 120 |
| Moisture content | % | 1.6 |
| Loss on ignition | % | 10.6 |

The sheet material complied with the non-combustibility requirements of BS 476 Part 4 1970, and stood up well to the stresses imposed by passage between the rollers of conventional paper-corrugating plant.

BAD ORIGINAL

Claims:

1.  Non-asbestos flexible sheet material made by dewatering on a water-permeable conveyor a layer of aqueous slurry and compressing and drying the dewatered layer, the aqueous slurry employed being one that contains the following ingredients in the following proportions by dry weight:

    | | |
    |---|---|
    | ball clay | 35-50% |
    | layer silicate mineral having plate-like particles | 20-40% |
    | cellulose fibres | at least 2% |
    | starch | at least 2% |
    | chopped glass fibre | 5-12% |
    | vitreous fibre in wool form | 5-15% |
    | bentonite | 2-10% - |

    the maximum content of combustible ingredients (including cellulose fibres and starch) in said slurry being 10% by dry weight.

2.  Flexible sheet material according to claim 1, in which the chopped glass fibre is of length in the range 5-7mm.

3.  Flexible sheet material according to claim 2, in which the slurry also contains chopped glass fibre of length below 4mm.

4.  Flexible sheet material according to any of claims 1 to 3, in which the silicate mineral is chlorite.

5.  Flexible sheet material according to any of claims 1 to 3, in which the silicate mineral is mica.

6.  Non-asbestos flexible sheet material substantially as described with reference to the Example herein.

BAD ORIGINAL